# EUROPEAN PATENT SPECIFICATION

(11) **EP 2 579 663 B1**
(45) Date of publication and mention of the grant of the patent: **22.11.2017**
(21) Application number: 11789137.4
(22) Date of filing: 24.05.2011
(51) Int. Cl.: H04W 28/18, H04W 4/00, H04W 8/24

(54) **METHOD AND DEVICE FOR REPORTING AND OBTAINING THE CAPABILITY OF A MACHINE TYPE COMMUNICATION DEVICE**
VERFAHREN UND VORRICHTUNG ZUM BERICHTEN UND ERHALTEN DER FÄHIGKEIT EINER MASCHINENARTIGEN KOMMUNIKATIONSVORRICHTUNG
PROCÉDÉ ET DISPOSITIF DESTINÉS À RAPPORTER ET À OBTENIR LA CAPABILITÉ D'UN DISPOSITIF DE COMMUNICATION DE TYPE MACHINE

(30) Priority: 02.06.2010 CN 201010199226
(43) Date of publication of application: 10.04.2013
(73) Proprietor: ZTE Corporation, Shenzhen, Guangdong 518057 (CN)
(72) Inventor: HUANG, Chun, Guangdong 518057 (CN); HUANG, He, Guangdong 518057 (CN)
(74) Representative: Brunner, John Michael Owen
(86) International application number: PCT/CN2011/074609
(87) International publication number: WO 2011/150758

(56) References cited:
- EP-A1- 2 141 938
- EP-A2- 1 655 880
- WO-A2-2011/028481
- CN-A- 1 954 557
- CN-A- 101 052 211
- CN-A- 101 207 553
- "3rd Generation Partnership Project; Technical Specification Group Services and System Aspects; System Improvements for Machine-Type Communications; (Release 10)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.4.0, 26 May 2010 (2010-05-26), pages 1-54, XP050441471, [retrieved on 2010-05-26]

## Description

### Filed of the Invention

The present invention relates to the communication field, and in particular to a method, machine type communication (MTC) device and network side device for reporting and obtaining capability of the MTC device.

### Background of the Invention

Machine to Machine (M2M) is a network application and service, of which the intelligent interaction between machine terminals is a core. M2M combines sensor network and radio communication technology, takes multiple communication methods as assess method and provides information solution for user.

Via M2M, user can monitor external environment in real time to realize large scope and automatic information collection. Therefore, M2M can be applied in industry application, household application and individual application, wherein the industry application can be traffic monitor and control, alarm system, rescue at sea, automatic vending machine, driving payment and so on; the household application can be automatic meter reading, temperature control and so on; and the individual application can be life detection, remote diagnosis and so on.

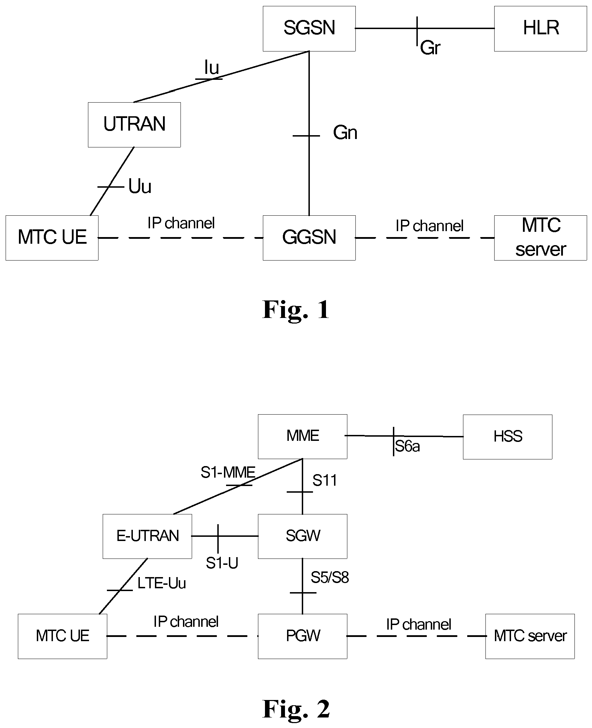

The communication object of M2M is machine to machine or man to machine. Data communication among a plurality of machines is defined as machine type communication, and under this circumstance, man-machine interaction is rarely needed. Machine involved in MTC is defined as MTC device. MTC device is a terminal of MTC user, which can communicate with MTC device and/or MTC server via Public Land Mobile Network (PLMN). Mobile Equipment (ME) is a function block carried by the MTC device, and the function block is configured to enable the MTC device to access the mobile communication system. The MTC Server supervises and monitors the MTC device. Fig.1 and Fig.2 are schematic diagrams of ME accessing Core Network (CN) via UMTS Terrestrial Radio Access Network (UTRAN) and Evolved UTRAN (E-UTRAN) in the related art respectively.

In the related art, in order to enable the network side to obtain capability of the MTC device, so as to carry out resource allocation and related configuration, the MTC device needs to report its own capability to the network side item by item, such as the value of capability parameter, indication of whether supporting certain capability or not and so on. This process can consume large air interface resources.

Machine type communication MTC devices are discussed in "3rd Generation Partnership Project; Technical Specification Group Services and System Aspects; System Improvements for Machine-Type Communications; (Release 10)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20100526), no. V0.4.0, PAGE 1 - 54. EP1655880 A2 relates to a system and method for transmitting and receiving hybrid automatic repeat request (HARQ) buffer capability information in a broadband wireless access communication system, wherein a mobile station detects its own HARQ buffer capacity and transmits a message including information about the detected HARQ buffer capability in index form to a base station, and the base station receives the message and determines the amount of a transmission signal to be allocated to the mobile station based on the HARQ buffer capability.

### Summary of the Invention

The present invention aims at providing a method for reporting/obtaining capability of the MTC device, a MTC device and a network side device to solve at least above-mentioned problems.

The present invention provides a method for reporting capability of a MTC device as defined in appended claim 1. The method comprises: the MTC device mapping a combination consisting of capability parameters of the MTC device to an index, based on a same rule of a network side, wherein the rule is a corresponding relationship between the capability parameters combination of the MTC device and the index; and the MTC device reporting the index to the network side.

The MTC device mapping the combination consisting of capability parameters of the MTC device to the index, based on the same rule of the network side, comprises: the MTC device searching the index corresponding to the combination consisting of the capability parameters in a saved corresponding relationship table of the corresponding relationship.

The MTC device mapping the combination consisting of capability parameters of the MTC device to the index, based on the same rule of the network side, comprises: the MTC device mapping a combination consisting of uplink capability parameters of the MTC device to a first index, based on the rule; and/or the MTC device mapping a combination consisting of downlink capability parameters of the MTC device to a second index, based on the rule.

The MTC device reporting the index to the network side comprises: the MTC device sending a radio resource control (RRC) message carrying the index to the network side.

The RRC message comprises at least one of the followings: a RRC connection establishment request message, a RRC connection establishment complete message, an MTC device capability enquiry response message and a switch message.

Before the MTC device mapping the combination consisting of capability parameters of the MTC device to the index, based on the same rule of the network side, the method further comprises: the MTC device and the network side determining the rule via negotiation, or setting the rule on the MTC device and on the network side.

The present invention provides a method for obtaining capability of a MTC device as defined in appended claim 6.

The method comprises: a network side receiving an index reported by the MTC device; and the network side determining capability parameters to which the index is mapped, based on a same rule of the MTC device, wherein the rule is a corresponding relationship between a capability parameters combination of the MTC device and the index.

The network side determining the capability parameters to which the index is mapped, based on the same rule of the MTC device, comprises: the network side searching the capability parameters to which the index is mapped in a saved corresponding relationship table of the corresponding relationship.

The network side receiving the index from the MTC device comprises: the network side receiving a radio resource control (RRC) message from the MTC device; and the network side resolving the index from the RRC message.

Before the network side determining the capability parameters to which the index is mapped, based on the same rule of the MTC device, the method further comprises: the network side and the MTC device determining the rule via negotiation, or setting the rule on the MTC device and on the network side.

The present invention provides an MTC device as defined in appended claim 10, comprising: a mapping module, configured to map a combination consisting of capability parameters of the MTC device to an index, based on a same rule of a network side, wherein the rule is a corresponding relationship between the capability parameters combination of the MTC device and the index; and a reporting module, configured to report the index to the network side.

The present invention provides a network side device as defined in appended claim 11, comprising: a receiving module, configured to receive a index from a machine type communication (MTC) device; and a determination module, configured to determine capability parameters to which the index is mapped, based on a same rule of the MTC device, wherein the rule is a corresponding relationship between a capability parameters combination of the MTC device and the index.

Via the present invention, the MTC device, based on a same rule of a network side, maps the combination consisting of the capability parameters of the MTC device to the index, and sends the index to the network side. This solution solves the problem of wasting air interface resources in the capability reporting method of the related art, and saves the cost of the air interface resources.

### Brief Description of the Drawings

The drawings herein provide a further understanding of the present invention, and constitute a part of the application. The exemplary embodiments of the present invention and the explanation thereof are given to illustrate the present invention, and thus do not constitute limitation of the present invention.
Fig. 1 is a schematic diagram of ME accessing the core network via UTRAN according to the related art;
Fig. 2 is a schematic diagram of ME accessing the core network via E-UTRAN according to the related art;
Fig. 3 is a flowchart of a method for reporting capability of the MTC device according to the embodiment of the present invention;
Fig. 4 is a flowchart of a method for obtaining capability of the MTC device according to the embodiment of the present invention;
Fig. 5 is a schematic structural diagram of the MTC device according to the embodiment of the present invention;
Fig. 6 is a schematic structural diagram of the network side device according to the embodiment of the present invention; and
Fig. 7 is a flowchart of a method for reporting and obtaining capability of the MTC device according to the embodiment of the present invention.

### Detailed Description of the Embodiments

The present invention will be described in detail hereinafter in conjunction with the embodiments and drawings of the present invention. It should be noted that the embodiments of the present invention and the features thereof can be combined with each other, if there is no conflict.

The MTC device is the terminal of MTC user, which can communicate with other MTC devices and the MTC servers via PLMN network. In order to enable the network side to obtain capability of the MTC device, so as to carry out resource allocation and related configuration, the MTC device needs to report its own capability to the network side item by item. This process can consume large air interface resources. Therefore, the following embodiments of the present invention provide a method for reporting/obtaining capability of the MTC device, a MTC device and a network side device, solving the above-mentioned problem. They will be described in detail hereinafter.

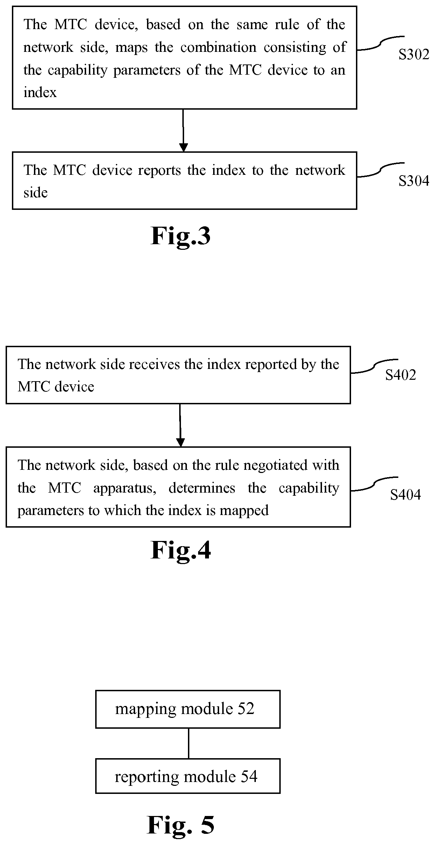

Fig. 3 is a flowchart of a method for reporting capability of the MTC device according to the embodiment of the present invention. The method comprises that:
Step S302, the MTC device, based on the same rule of the network side, maps the combination consisting of the capability parameters of the MTC device to an index, wherein the rule is the corresponding relationship between the capability parameters combination of the MTC device and the index; and
Step S304, the MTC device reports the index to the network side.

In the related art, the MTC device needs to report its own capability to the network side item by item (such as, the value of capability parameter, indication of whether supporting certain capability or not and so on). For the MTC device, the service characteristics and functions are stable. Therefore, the capability is also stable. If the traditional capability reporting method is adopted when the MTC device is accessing, then the carrying capability will be redundant, and large air interface resources will be consumed. In the method provided in the embodiment of the present invention, the MTC device maps the combination consisting of its own capability parameters to an index, and sends the index. The number of bits of the index is significantly less than the total number of bits of multiple capability parameters, therefore decreasing the air interface resources occupied by capability reporting and reducing the cost of the air interface resources.

It should be noted that the MTC device and the network side follow the same rule. The same rule means the mapping rule with the same essential contents. However, in order to adapt to the actual condition of the MTC device and the network side, the specific forms of the same rule may be different. For example, the rule is stored and embodied via the form of table in the MTC device, and is stored and embodied via the form of matrix in the network side.

Preferably, step S302 comprises that the MTC device searches the index which corresponds to the combination consisting of the capability parameters in the saved corresponding relationship table of the corresponding relationship. Via the same corresponding relationship table between the MTC device and the network side, the MTC device can rapidly find the index which corresponds to the combination consisting of its own capability parameters without analyzing the document. Thus, the solution has high efficiency and low probability of error.

Preferably, the step S302 comprises that the MTC device, based on the above-mentioned rule, maps the combination consisting of the uplink capability parameters of the MTC device to a first index; and/or based on the above-mentioned rule, maps the combination consisting of the downlink capability parameters of the MTC device to a second index. Via the above process, on one hand, the indexes are separately searched and sent under the circumstance that only the uplink or the downlink capability needs to be sent, which saves time and resources for searching the index of the MTC device, and further saves the overhead of the air interface. On the other hand, because the number of types of the capability parameters indicated by one index is decreased, the complexity of the above-mentioned rule is reduced, and furthermore the scope of the index value is decreased, thus reducing the overhead of the air interface for transmitting single index.

Preferably, the step S304 comprises that the MTC device sends a Radio Resource Control (RRC) message carrying the index to the network side. The index is carried in the existing message, so that no new message structure is required to be defined. Thus the implementation of this process is simple.

Preferably, the above-mentioned RRC message comprises at least one of the followings: a RRC connection establishment request message, a RRC connection establishment complete message, an MTC device capability enquiry response message, and a switch message. The above messages carrying the index enable the network side to program the connection establishment process according to the capability parameters corresponding to the index.

Preferably, before the step that the MTC device, based on a same rule of a network side, maps the combination consisting of the capability parameters of the MTC device to the index, the method further comprises that the MTC device and the network side determine the rule via negotiation, or the rule is set on the MTC device and on the network side.

It should be noted that the above rule followed by the MTC device can be a pre-configured fixed rule (such as, the rule uniformly defined in the industry). When reporting is needed, reporting is made based on the fixed rule without configuring a new rule each time. Or, the corresponding rule can be negotiated with the network side, and reporting is carried out according to the negotiated rule. The specific negotiation process can be initiated by the MTC device, and also can be initiated by the network side.

Fig. 4 is a flowchart of a method for obtaining capability of the MTC device according to the embodiment of the present invention, and the method comprises that:
Step S402, the network side receives the index reported by the MTC device; and
Step S404, the network side, based on the same rule of the MTC device, determines the capability parameters to which the index is mapped, wherein the above-mentioned rule is the corresponding relationship between the capability parameters combination of the MTC device and the index.

In the related art, the network side needs to obtain a large amount of capability parameters of the MTC device from the air interface. On one hand, it wastes the air interface resources, and on the other hand, it makes the analyzing process on the network side quite redundant and complex. In the obtaining method provided by the embodiment of the present invention, after receiving the index reported by the MTC device, based on the same rule of the MTC device, the network side determines the capability parameters to which the index is mapped. This solution decreases the overhead of the air interface resources, and meanwhile, simplifies the process that the network side analyzes the capability information of the MTC device, and improves the processing efficiency of the network side.

Preferably, the step S404 comprises that the network side searches the capability parameters to which the index is mapped in the saved corresponding relationship table of the corresponding relationship. Via the same corresponding relationship table between the MTC device and the network side, the network side can rapidly find the series of capability parameters corresponding to the received index, thus achieving high efficiency and low error probability.

Preferably, the step S402 comprises that the network side receives the RRC message from the MTC device; and the network side analyzes the above index from the RRC message. The network side analyzes the above index from the existing message without adding extra analysis process, and the process of analyzing one (or multiple) index value is relatively simpler than analyzing a series of capability parameters. Therefore in general, the method has high analysis efficiency and high accuracy rate.

Preferably, before the step that the network side, based on the same rule of the MTC device, determines the capability parameters to which the index is mapped, the method further comprises that the network side and the MTC device determine the rule via negotiation, or the rule is set on the MTC device and on the network side.

It should be noted that the above rule followed by the network side can be a pre-configured fixed rule (such as, the rule uniformly defined in the industry). When reporting is needed, reporting is made based on the fixed rule without configuring a new rule each time. Or, the corresponding rule can be negotiated with the network side, and reporting is carried out according to the negotiated rule. The specific negotiation process can be initiated by the MTC device, and also can be initiated by the network side.

Fig. 5 is a schematic structural diagram of the MTC device according to the embodiment of the present invention, comprising: a mapping module 52, configured to, based on the same rule of the network side, map the combination consisting of the capability parameters of the MTC device to an index, wherein the rule is the corresponding relationship between the capability parameters combination of the MTC device and the index; and a reporting module 54, coupled to the mapping module 52 and configured to report the index to the network side.

The MTC device provided by the embodiment of the present invention maps the combination consisting of its own capability parameters to the index via the mapping module 52, and sends the above index via the reporting module 54, thus decreasing the air interface resources occupied by capability reporting and reducing the overhead of the air interface resources.

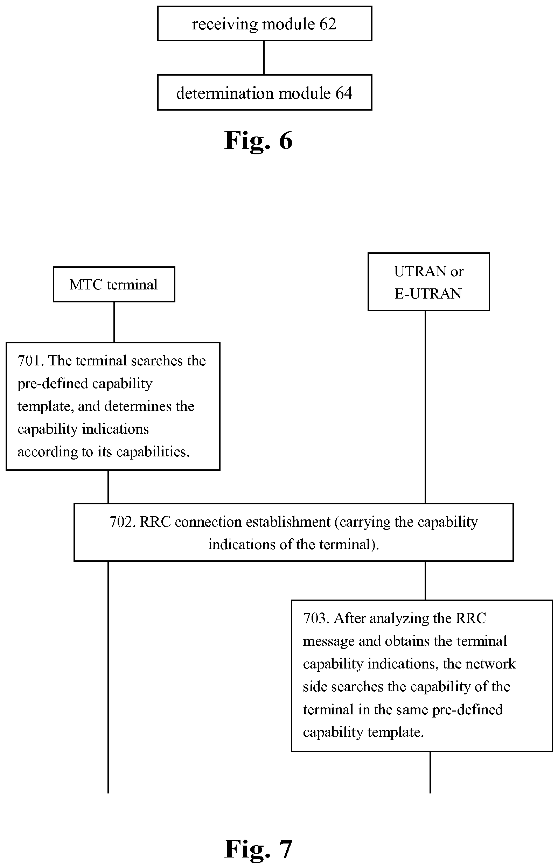

Fig. 6 is a schematic structural diagram of the network side device according to the embodiment of the present invention, comprising: a receiving module 62, configured to receive the index from the MTC device; a determination module 64, coupled to the receiving module 62 and configured to, based on the same rule of the MTC device, determine the capability parameters to which the index is mapped, wherein the rule is the corresponding relationship between the capability parameters combination of the MTC device and the index. The network side device provided by the embodiment of the present invention receives the index from the MTC device via the receiving module 62, and then determines the capability parameters to which the index is mapped via the determination module 64. Thus, the network side device reduces the overhead of the air interface resources, and meanwhile simplifies the process that the network side analyzes the capability information of the MTC device, and improves the processing efficiency of the network side.

The embodiment of the present invention provides a method for packing capability information of the terminal (namely, the MTC device). Each packet contains a pre-defined terminal capability; each packet corresponds to an indication; and the terminal and the network side save the same capability packets and the corresponding indications. The terminal searches the capability packet corresponding to its own capability when accessing the network, and the terminal only needs to report the corresponding indication of its own capability packet to the network side. The network searches the corresponding capability packet when receives the capability packet indication reported by the terminal, and further obtains the terminal capability. The present invention will be described in detail hereinafter via specific embodiments.

The following described Embodiments 1 to 3 combine the technical solutions of multiple above mentioned preferred embodiments.

### Embodiment 1

Table 1 and Table 2 respectively show the corresponding relationship of the uplink and the downlink capability parameters combination (also called capability packet hereinafter) and the corresponding indications (equal to the index described above). This embodiment takes the following Table 1 and Table 2 as examples to demonstrate the reporting and obtaining of capability of the MTC device.

**Table 1**

| **Downlink Capability Indication** | DL Cap.1 | DL Cap.2 | DL Cap.3 | DL Cap.4 | DL Cap.5 | DL Cap.6 | DL Cap.7 |
|---|---|---|---|---|---|---|---|
| maximum bit number of a transmission block received within one TTI | 1280 | 1280 | 3840 | 3840 | 6400 | 10240 | 20480 |
| maximum bit number of a convolutional coding transmission block received within one TTI by Maxim | 640 | 640 | 640 | 640 | 640 | 640 | 640 |
| maximum bit number of a turbo coding transmission block received within one TTI | 1280 | 1280 | 3840 | 3840 | 6400 | 10240 | 20480 |
| maximum number of coexisting transmission channels | 4 | 8 | 8 | 8 | 8 | 8 | 16 |
| maximum number of coexisting CCTrCH channels | 1 | 2 | 3 | 3 | 3 | 4 | 4 |
| maximum TFC number | 16 | 32 | 48 | 96 | 128 | 256 | 1024 |
| maximum TF number | 32 | 32 | 64 | 64 | 64 | 128 | 256 |
| Support turbo decoding or not | Yes | Yes | Yes | Yes | Yes | Yes | Yes |
| maximum timeslot number of each subframe | 1 | 1 | 2 | 3 | 4 | 6 | 6 |
| maximum physical channel number of each subframe | 5 | 8 | 12 | 18 | 43 | 77 | 77 |
| minimum SF | 16 | 16 | 16 | 16 | 1 | 1 | 1 |
| Support PDSCH or not | No | Yes | Yes | Yes | Yes | Yes | Yes |
| Support HS-PDSCH or not | No | No | Yes | Yes | Yes | Yes | Yes |
| maximum physical channel number of each timeslot | 5 | 8 | 11 | 14 | 14 | 14 | 14 |
| Support 8PSK or not | No | No | No | No | No | No | Yes |

**Table 2**

| **Uplink Capability Indication** | Uplink Cap.1 | Uplink Cap.2 | Uplink Cap.3 | Uplink Cap.4 | Uplink Cap.5 | Uplink Cap.6 |
|---|---|---|---|---|---|---|
| maximum sum of the bit number of all transmission blocks at any time | 640 | 640 1280 | 3840 | 3840 | 6400 | 10240 |
| maximum sum of the bit number of all convolutional coding transmission blocks at any time | 640 | 640 | 640 | 640 | 640 | 640 |
| maximum sum of the bit number of all turbo coding transmission blocks at any time | NA | 1280 | 3840 | 3840 | 6400 | 10240 |
| maximum number of coexisting transmission channels | 4 | 4 | 8 | 8 | 8 | 8 |
| maximum number of coexisting CCTrCH channels | 1 | 1 | 2 | 2 | 2 | 2 |
| maximum TFC number | 16 | 16 | 32 | 48 | 64 | 128 |
| maximum TF number | 32 | 32 | 32 | 32 | 32 | 64 |
| Support turbo coding or not | No | Yes | Yes | Yes | Yes | Yes |
| maximum timeslot number of each subframe | 1 | 1 | 2 | 3 | 5 | 5 |
| maximum physical channel number of each timeslot | 1 | 2 | 2 | 2 | 2 | 2 |
| minimum SF | 8 | 4 | 2 | 2 | 2 | 2 |
| Support PUSCH or not | No | Yes | Yes | Yes | Yes | Yes |
| Support 8PSK or not | No | No | No | No | No | No |
| Support E-PUCH or not | No | Yes | Yes | Yes | Yes | Yes |

In this embodiment, the uplink and the downlink capabilities of the MTC device are respectively packed, wherein Table 1 is the downlink capability and Table 2 is the uplink capability. The uplink and the downlink capability respectively correspond to its own capability indications. When the MTC device reports its own capabilities, only the uplink and the downlink capability indications are needed to be reported. For example, if the MTC device supports the downlink capability corresponding to the downlink capability 3 in Table 1 and the uplink capability corresponding to the uplink capability 4 in Table 2, then the MTC device only needs to report to the network side that the uplink capability 3 and the downlink capability 4 are supported. After the network side receives the uplink capability 3 and the downlink capability 4 indications reported by the MTC device, the network side also can obtain the uplink and the downlink capabilities supported by the MTC device from Table 1 and Table 2 respectively.

### Embodiment 2

Table 3 shows the corresponding relationship of the uplink and the downlink capability parameters combination (also called capability packet hereinafter) and the corresponding indications (equal to the index described in above). This embodiment takes the following Table 3 as an example to demonstrate the reporting and obtaining of capability of the MTC device.

**Table 3**

| | Cap.1 | Cap.2 | Cap.3 | Cap.4 | Cap.5 | Cap.6 | Cap.7 | Cap.8 | Cap.9 | Cap.10 |
|---|---|---|---|---|---|---|---|---|---|---|
| **Downlink Capability** | | | | | | | | | | |
| maximum bit number of a transmission block received within one TTI | 1280 | 1280 | 3840 | 3840 | 6400 | 10240 | 1280 | 1280 | 6400 | 20480 |
| maximum bit number of a convolutional coding transmission block received within one TTI by Maxim | 640 | 640 | 640 | 640 | 640 | 640 | 640 | 640 | 640 | 640 |
| maximum bit number of a turbo coding transmission block received within one TTI | 1280 | 1280 | 3840 | 3840 | 6400 | 10240 | 1280 | 1280 | 6400 | 20480 |
| maximum number of coexisting transmission channels | 4 | 8 | 8 | 8 | 8 | 8 | 4 | 8 | 8 | 16 |
| maximum number of coexisting CCTrCH channels | 1 | 2 | 3 | 3 | 3 | 4 | 1 | 2 | 3 | 4 |
| maximum TFC number | 16 | 32 | 48 | 96 | 128 | 256 | 16 | 32 | 128 | 1024 |
| maximum TF number | 32 | 32 | 64 | 64 | 64 | 128 | 32 | 32 | 64 | 256 |
| Support turbo decoding or not | Yes | Yes | Yes | Yes | Yes | Yes | Yes | Yes | Yes | Yes |
| maximum timeslot number of each subframe | 1 | 1 | 2 | 3 | 4 | 6 | 1 | 1 | 4 | 6 |
| maximum physical channel number of each subframe | 5 | 8 | 12 | 18 | 43 | 77 | 5 | 8 | 43 | 77 |
| minimum SF | 16 | 16 | 16 | 16 | 1 | 1 | 16 | 16 | 1 | 1 |
| Support PDSCH or not | No | Yes | Yes | Yes | Yes | Yes | No | Yes | Yes | Yes |
| Support HS-PDSCH or not | No | No | Yes | Yes | Yes | Yes | No | No | Yes | Yes |
| maximum physical channel number of each timeslot | 5 | 8 | 11 | 14 | 14 | 14 | 5 | 8 | 14 | 14 |
| Support 8PSK or not | No | No | No | No | No | No | No | No | No | Yes |

| **Uplink Capability** | | | | | | | | | | |
|---|---|---|---|---|---|---|---|---|---|---|
| maximum sum of the bit number of all transmission blocks at any time | 640 | 640 1280 | 3840 | 3840 | 6400 | 10240 | 3840 | 640 | 3840 | 640 1280 |
| maximum sum of the bit number of all convolutional coding transmission blocks at any time | 640 | 640 | 640 | 640 | 640 | 640 | 640 | 640 | 640 | 640 |
| maximum sum of the bit number of all turbo coding transmission blocks at any time | NA | 1280 | 3840 | 3840 | 6400 | 10240 | 3840 | NA | 3840 | 1280 |
| maximum number of coexisting transmission channels | 4 | 4 | 8 | 8 | 8 | 8 | 8 | 4 | 8 | 4 |
| maximum number of coexisting CCTrCH channels | 1 | 1 | 2 | 2 | 2 | 2 | 2 | 1 | 2 | 1 |
| maximum TFC number | 16 | 16 | 32 | 48 | 64 | 128 | 48 | 16 | 48 | 16 |
| maximum TF number | 32 | 32 | 32 | 32 | 32 | 64 | 32 | 32 | 32 | 32 |
| Support turbo coding or not | No | Yes | Yes | Yes | Yes | Yes | Yes | No | Yes | Yes |
| maximum timeslot number of each subframe | 1 | 1 | 2 | 3 | 5 | 5 | 3 | 1 | 3 | 1 |
| maximum physical channel number of each timeslot | 1 | 2 | 2 | 2 | 2 | 2 | 2 | 1 | 2 | 2 |
| minimum SF | 8 | 4 | 2 | 2 | 2 | 2 | 2 | 8 | 2 | 4 |
| Support PUSCH or not | No | Yes | Yes | Yes | Yes | Yes | Yes | No | Yes | Yes |
| Support 8PSK or not | No | No | No | No | No | No | No | No | No | No |
| Support E-PUCH or not | No | Yes | Yes | Yes | Yes | Yes | Yes | No | Yes | Yes |

In this embodiment, the combination of the uplink and the downlink capabilities of the MTC device is packed, and one capability indication is used to indicate the uplink and the downlink capabilities of the MTC device. When the MTC device reports its own capabilities, only the capability indication is needed to be reported. For example, if the MTC device supports the uplink and the downlink capabilities corresponding to the capability 4 in Table 3, then the MTC device only needs to report to the network side that the capability 4 is supported. After the network side receives the capability 4 indication reported by the MTC device, the network side also can obtain the uplink and the downlink capabilities supported by the MTC device from Table 3.

### Embodiment 3

Fig. 7 is a flowchart of a method for reporting and obtaining capability of the MTC device according to the embodiment of the present invention, comprising the following steps:
Step S701, the MTC device determines the corresponding capability indication according to its own capability situation;
Step S702, the MTC device sends to the network side a RRC connection establishment message carrying the capability indications of the MTC device, wherein the RRC message may be a RRC connection establishment request message or a RRC connection establishment complete message; and
Step S703, the network side analyzes the RRC message and obtains the capability indications of the MTC device; and the network side inquires and obtains from the same table the capabilities corresponding to the capability indications of the MTC device.

To sum up, the solution provided by the embodiment of the present invention decreases the air interface resources occupied by the capability reporting, reduces the overhead of the air interface, and further improves the efficiency of the network side analyzing the capability message.

### Industrial applicability

The solutions provided by the above embodiments do not require to change the hardware of the MTC terminal and the network side, and can be realized by updating the software, which is simple to realize, easy to extend, and has strong industrial applicability.

Obviously, those skilled in the art shall understand that the above-mentioned modules or steps of the present invention can be realized by using general purpose calculating device, and can be integrated in one calculating device or distributed on a network which consists of a plurality of calculating devices. Alternatively, the modules and the step of the present invention can be realized by using the executable program code of the calculating device. Consequently, the modules and the steps can be stored in the storage device and executed by the calculating device, or the modules and the steps are made into integrated circuit module respectively, or a plurality of modules or steps thereof are made into one integrated circuit module. In this way, the present invention is not restricted to any particular hardware and software combination.

## Claims

1. A method for reporting capability of a machine type communication, MTC, device, comprising:
the MTC device mapping (S302) a combination consisting of capability parameters of the MTC device to an index, based on a same rule of a network side, wherein the rule is a corresponding relationship between the capability parameters combination of the MTC device and the index;
wherein the MTC device mapping the combination consisting of capability parameters of the MTC device to the index, based on the same rule of the network side, the index comprising a first index and a second index, comprises:
based on the rule, the MTC device mapping a combination consisting of uplink capability parameters of the MTC device to the first index, and mapping a combination consisting of downlink capability parameters of the MTC device to the second index; and
the MTC device reporting (S304) the index to the network side.

2. The method according to Claim 1, wherein the MTC device mapping the combination consisting of capability parameters of the MTC device to the index, based on the same rule of the network side, comprises:
the MTC device searching the index corresponding to the combination consisting of the capability parameters in a saved corresponding relationship table of the corresponding relationship.

3. The method according to Claim 1, wherein the MTC device reporting the index to the network side comprises:
the MTC device sending a radio resource control, RRC, message carrying the index to the network side.

4. The method according to Claim 3, wherein the RRC message comprises at least one of: a RRC connection establishment request message, a RRC connection establishment complete message, an MTC device capability enquiry response message and a switch message.

5. The method according to Claim 1, wherein before the MTC device mapping the combination consisting of capability parameters of the MTC device to the index, based on the same rule of the network side, the method further comprises: the MTC device and the network side determining the rule via negotiation, or setting the rule on the MTC device and on the network side.

6. A method for obtaining capability of a machine type communication, MTC, device, comprising:
a network side receiving (S402) an index reported by the MTC device; and
the network side determining (S404) capability parameters to which the index is mapped, based on a same rule of the MTC device, wherein the rule is a corresponding relationship between a capability parameters combination of the MTC device and the index;
wherein the index comprises: a first index mapped by a combination consisting of uplink capability parameters of the MTC device, and a second index mapped by a combination consisting of downlink capability parameters of the MTC device.

7. The method according to Claim 6, wherein the network side determining the capability parameters to which the index is mapped, based on the same rule of the MTC device, comprises:
the network side searching the capability parameters to which the index is mapped in a saved corresponding relationship table of the corresponding relationship.

8. The method according to Claim 6, wherein the network side receiving the index from the MTC device comprises:
the network side receiving a radio resource control, RRC, message from the MTC device; and
the network side resolving the index from the RRC message.

9. The method according to Claim 6, wherein before the network side determining the capability parameters to which the index is mapped, based on the same rule of the MTC device, the method further comprises: the network side and the MTC device determining the rule via negotiation, or setting the rule on the MTC device and on the network side.

10. A machine type communication, MTC, device, comprising:
a mapping module (52), configured to map a combination consisting of capability parameters of the MTC device to an index, based on a same rule of a network side, wherein the rule is a corresponding relationship between the capability parameters combination of the MTC device and the index, and the index comprises: a first index mapped by a combination consisting of uplink capability parameters of the MTC device, and a second index mapped by a combination consisting of downlink capability parameters of the MTC device; and
a reporting module (54), configured to report the index to the network side.

11. A network side device, comprising:
a receiving module (62), configured to receive an index from a machine type communication, MTC, device; and
a determination module (64), configured to determine capability parameters to which the index is mapped, based on a same rule of the MTC device, wherein the rule is a corresponding relationship between a capability parameters combination of the MTC device and the index, and the index comprises: a first index mapped by a combination consisting of uplink capability parameters of the MTC device, and a second index mapped by a combination consisting of downlink capability parameters of the MTC device.

## Patentansprüche

1. Verfahren zum Melden einer Leistungsfähigkeit einer Maschinentypkommunikationsvorrichtung, MTC-Vorrichtung, umfassend:
ein Abbilden (S302) einer aus Leistungsfähigkeitsparametern der MTC-Vorrichtung bestehenden Kombination auf einen Index durch die MTC-Vorrichtung, auf Basis einer gleichen Regel auf einer Netzwerkseite, wobei die Regel eine entsprechende Beziehung zwischen der Kombination der Leistungsfähigkeitsparameter der MTC-Vorrichtung und dem Index ist;
wobei das Abbilden der aus Leistungsfähigkeitsparametern der MTC-Vorrichtung bestehenden Kombination auf den Index, der einen ersten Index und einen zweiten Index umfasst, durch die MTC-Vorrichtung auf Basis der gleichen Regel auf der Netzwerkseite umfasst:
ein Abbilden, auf Basis der Regel durch die MTC-Vorrichtung, einer aus Leistungsfähigkeitsparametern der MTC-Vorrichtung auf der Aufwärtsstrecke bestehenden Kombination auf den ersten Index und ein Abbilden einer aus Leistungsfähigkeitsparametern der MTC-Vorrichtung auf der Abwärtsstrecke bestehenden Kombination auf den zweiten Index; und
ein Melden (S304) des Index an die Netzwerkseite durch die MTC-Vorrichtung.

2. Verfahren nach Anspruch 1, wobei das Abbilden der aus Leistungsfähigkeitsparametern der MTC-Vorrichtung bestehenden Kombination auf den Index durch die MTC-Vorrichtung auf Basis der gleichen Regel der Netzwerkseite umfasst:
ein Suchen nach dem Index, der der aus den Leistungsfähigkeitsparametern bestehenden Kombination entspricht, in einer gespeicherten entsprechenden Beziehungstabelle der entsprechenden Beziehung durch die MTC-Vorrichtung.

3. Verfahren nach Anspruch 1, wobei das Melden des Index an die Netzwerkseite durch die MTC-Vorrichtung umfasst:
Senden einer den Index tragenden Funkressourcensteuerungsnachricht, RRC-Nachricht, an die Netzwerkseite durch die MTC-Vorrichtung.

4. Verfahren nach Anspruch 3, wobei die RRC-Nachricht mindestens eines von Folgendem umfasst: eine Nachricht zur Anforderung einer Einrichtung einer RRC-Verbindung, eine Nachricht über den Abschluss der Einrichtung einer RRC-Verbindung, eine Antwortnachricht auf eine Abfrage nach der Leistungsfähigkeit einer MTC-Vorrichtung und eine Umschaltnachricht.

5. Verfahren nach Anspruch 1, wobei das Verfahren vor dem Abbilden der aus Leistungsfähigkeitsparametern der MTC-Vorrichtung bestehenden Kombination auf den Index durch die MTC-Vorrichtung auf Basis der gleichen Regel der Netzwerkseite ferner umfasst: Ermitteln der Regel über eine Verhandlung durch die MTC-Vorrichtung und die Netzwerkseite oder Festlegen der Regel auf der MTC-Vorrichtung und auf der Netzwerkseite.

6. Verfahren zum Erhalten einer Leistungsfähigkeit einer Maschinentypkommunikationsvorrichtung, MTC-Vorrichtung, umfassend:
ein Empfangen (S402) eines von der MTC-Vorrichtung gemeldeten Index auf der Netzwerkseite; und
ein Ermitteln (S404) von Leistungsfähigkeitsparametern, auf die der Index abgebildet ist, durch die Netzwerkseite auf Basis einer gleichen Regel der MTC-Vorrichtung, wobei die Regel eine entsprechende Beziehung zwischen einer Kombination der Leistungsfähigkeitsparameter der MTC-Vorrichtung und dem Index ist;
wobei der Index umfasst: einen ersten Index, der durch eine aus Leistungsfähigkeitsparametern der MTC-Vorrichtung auf der Aufwärtsstrecke bestehende Kombination abgebildet ist, und einen zweiten Index, der durch eine aus Leistungsfähigkeitsparametern der MTC-Vorrichtung auf der Abwärtsstrecke bestehende Kombination abgebildet ist.

7. Verfahren nach Anspruch 6, wobei das Ermitteln der Leistungsfähigkeitsparameter, auf die der Index abgebildet ist, durch die Netzwerkseite auf Basis der gleichen Regel der MTC-Vorrichtung umfasst:
ein Suchen der Leistungsfähigkeitsparameter, auf die der Index abgebildet ist, in einer gespeicherten entsprechenden Beziehungstabelle der entsprechenden Beziehung durch die Netzwerkseite.

8. Verfahren nach Anspruch 6, wobei das Empfangen des Index von der MTC-Vorrichtung durch die Netzwerkseite umfasst:
ein Empfangen einer Funkressourcensteuerungsnachricht, RRC-Nachricht, von der MTC-Vorrichtung durch die Netzwerkseite; und
ein Auflösen des Index aus der RRC-Nachricht durch die Netzwerkseite.

9. Verfahren nach Anspruch 6, wobei das Verfahren vor dem Ermitteln der Leistungsfähigkeitsparameter, auf die der Index abgebildet ist, durch die Netzwerkseite auf Basis der gleichen Regel der MTC-Vorrichtung ferner umfasst: Ermitteln der Regel über eine Verhandlung durch die Netzwerkseite und die MTC-Vorrichtung oder Festlegen der Regel auf der MTC-Vorrichtung und auf der Netzwerkseite.

10. Maschinentypkommunikationsvorrichtung, MTC-Vorrichtung, umfassend:
ein Abbildungsmodul (52), das konfiguriert ist, eine aus Leistungsfähigkeitsparametern der MTC-Vorrichtung bestehende Kombination auf einen Index auf Basis einer gleichen Regel auf einer Netzwerkseite abzubilden, wobei die Regel eine entsprechende Beziehung zwischen der Kombination der Leistungsfähigkeitsparameter der MTC-Vorrichtung und dem Index ist und der Index umfasst: einen ersten Index, der durch eine aus Leistungsfähigkeitsparametern der MTC-Vorrichtung auf der Aufwärtsstrecke bestehende Kombination abgebildet ist, und einen zweiten Index, der durch eine aus Leistungsfähigkeitsparametern der MTC-Vorrichtung auf der Abwärtsstrecke bestehende Kombination abgebildet ist; und
ein Meldemodul (54), das konfiguriert ist, den Index der Netzwerkseite zu melden.

11. Vorrichtung auf Netzwerkseite, umfassend:
ein Empfangsmodul (62), das konfiguriert ist, einen Index von einer Maschinentypkommunikationsvorrichtung, MTC-Vorrichtung, zu empfangen; und
ein Ermittlungsmodul (64), das konfiguriert ist, durch die Netzwerkseite auf Basis einer gleichen Regel der MTC-Vorrichtung Leistungsfähigkeitsparameter zu ermitteln, auf die der Index abgebildet ist, wobei die Regel eine entsprechende Beziehung zwischen einer Kombination der Leistungsfähigkeitsparameter der MTC-Vorrichtung und dem Index ist, und der Index umfasst: einen ersten Index, der durch eine aus Leistungsfähigkeitsparametern der MTC-Vorrichtung auf der Aufwärtsstrecke bestehende Kombination abgebildet ist, und einen zweiten Index, der durch eine aus Leistungsfähigkeitsparametern der MTC-Vorrichtung auf der Abwärtsstrecke bestehende Kombination abgebildet ist.

## Revendications

1. Procédé pour rapporter une capacité d'un dispositif de communication de type machine (MTC), comprenant les étapes suivantes :
le dispositif de communication MTC met en correspondance (S302) une combinaison se composant de paramètres de capacité du dispositif de communication MTC avec un index, en se basant sur une même règle d'un côté réseau, dans lequel la règle est une relation de correspondance entre la combinaison de paramètres de capacité du dispositif de communication MTC et l'index ;
dans lequel le dispositif de communication MTC mettant en correspondance la combinaison se composant de paramètres de capacité du dispositif de communication MTC avec l'index, en se basant sur la même règle du côté réseau, l'index comprenant un premier index et un second index, comprend :
en se basant sur la règle, le dispositif de communication MTC mettant en correspondance une combinaison se composant de paramètres de capacité de liaison montante du dispositif de communication MTC avec le premier index, et mettant en correspondance une combinaison se composant de paramètres de capacité de liaison descendante du dispositif de communication MTC avec le second index ;
et le dispositif de communication MTC rapporte (S304) l'index au côté réseau.

2. Procédé selon la revendication 1, dans lequel le dispositif de communication MTC mettant en correspondance la combinaison se composant de paramètres de capacité du dispositif de communication MTC avec l'index, en se basant sur la même règle du côté réseau, comprend :
le dispositif de communication MTC recherchant l'index correspondant à la combinaison se composant des paramètres de capacité dans une table de relation de correspondance sauvegardée de la relation de correspondance.

3. Procédé selon la revendication 1, dans lequel le dispositif de communication MTC rapportant l'index au côté réseau comprend :
le dispositif de communication MTC envoyant un message de commande de ressource radio (RRC) comportant l'index au côté réseau.

4. Procédé selon la revendication 3, dans lequel le message de commande RRC comprend : un message de demande d'établissement de connexion de commande RRC et/ou un message de fin d'établissement de connexion de ressource RRC et/ou un message de réponse de demande de capacité de dispositif de communication MTC et/ou un message de commutation.

5. Procédé selon la revendication 1, dans lequel, avant que le dispositif de communication MTC ne mette en correspondance la combinaison se composant de paramètres de capacité du dispositif de communication MTC avec l'index, en se basant sur la même règle du côté réseau, le procédé comprend en outre l'étape suivante : le dispositif de communication MTC et le côté réseau déterminent la règle par le biais d'une négociation ou définissent la règle concernant le dispositif de communication MTC et concernant le côté réseau.

6. Procédé pour obtenir une capacité d'un dispositif de communication de type machine (MTC), comprenant les étapes suivantes :
un côté réseau reçoit (S402) un index rapporté par le dispositif de communication MTC ; et
le côté réseau détermine (S404) des paramètres de capacité avec lesquels l'index est mis en correspondance, en se basant sur une même règle du dispositif de communication MTC, dans lequel la règle est une relation de correspondance entre une combinaison de paramètres de capacité du dispositif de communication MTC et l'index ;
dans lequel l'index comprend : un premier index mis en correspondance par une combinaison se composant de paramètres de capacité de liaison montante du dispositif de communication MTC et un second index mis en correspondance par une combinaison se composant de paramètres de capacité de liaison descendante du dispositif de communication MTC.

7. Procédé selon la revendication 6, dans lequel le côté réseau déterminant les paramètres de capacité avec lesquels l'index est mis en correspondance, en se basant sur la même règle du dispositif de communication MTC, comprend :
le côté réseau recherchant les paramètres de capacité avec lesquels l'index est mis en correspondance dans une table de relation de correspondance sauvegardée de la relation de correspondance.

8. Procédé selon la revendication 6, dans lequel le côté réseau recevant l'index en provenance du dispositif de communication MTC comprend :
le côté réseau recevant un message de commande de ressource radio (RRC) du dispositif de communication MTC ; et
le côté réseau résolvant l'index à partir du message de commande RRC.

9. Procédé selon la revendication 6, dans lequel, avant que le côté réseau ne détermine les paramètres de capacité avec lesquels l'index est mis en correspondance, en se basant sur la même règle du dispositif de communication MTC, le procédé comprend en outre l'étape suivante : le côté réseau et le dispositif de communication MTC déterminent la règle par le biais d'une négociation ou définissent la règle concernant le dispositif de communication MTC et concernant le côté réseau.

10. Dispositif de communication de type machine (MTC) comprenant :
un module de mise en correspondance (52), configuré pour mettre en correspondance une combinaison se composant de paramètres de capacité du dispositif de communication MTC avec un index, en se basant sur une même règle d'un côté réseau, dans lequel la règle est une relation de correspondance entre la combinaison de paramètres de capacité du dispositif de communication MTC et l'index et l'index comprend : un premier index mis en correspondance par une combinaison se composant de paramètres de capacité de liaison montante du dispositif de communication MTC et un second index mis en correspondance par une combinaison se composant de paramètres de capacité de liaison descendante du dispositif de communication MTC ; et
un module de compte-rendu (54), configuré pour rapporter l'index au côté réseau.

11. Dispositif de côté réseau comprenant :
un module de réception (62), configuré pour recevoir un index en provenance d'un dispositif de communication de type machine (MTC) ; et
un module de détermination (64), configuré pour déterminer des paramètres de capacité avec lesquels l'index est mis en correspondance, en se basant sur une même règle du dispositif de communication MTC, dans lequel la règle est une relation de correspondance entre une combinaison de paramètres de capacité du dispositif de communication MTC et l'index ; et l'index comprend : un premier index mis en correspondance par une combinaison se composant de paramètres de capacité de liaison montante du dispositif de communication MTC et un second index mis en correspondance par une combinaison se composant de paramètres de capacité de liaison descendante du dispositif de communication MTC.
